(19) Europäisches Patentamt

European Patent Office

Office européen des brevets

(11) **EP 1 671 658 A1**

(12) **DEMANDE DE BREVET EUROPEEN**

(43) Date de publication:
**21.06.2006 Bulletin 2006/25**

(51) Int Cl.:
*A61L 9/12* (2006.01)   *A61L 2/04* (2006.01)

(21) Numéro de dépôt: **05026440.7**

(22) Date de dépôt: **05.12.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **09.12.2004 FR 0413129**

(71) Demandeur: **VALEO SYSTEMES THERMIQUES**
**78321 Le Mesnil St Denis Cedex (FR)**

(72) Inventeurs:
• **Elliot, Gilles**
  **91080 Courcouronnes (FR)**
• **Giraud, Frédéric**
  **78610 Le Perray en Yvelines (FR)**
• **Ladrech, Frédéric**
  **78310 Maurepas (FR)**

(74) Mandataire: **Léveillé, Christophe**
**Valeo Systemes Thermiques**
**8, rue Louis Lormand**
**La Verrière BP 513**
**F-78321 Le Mesnil-Saint- Denis Cedex (FR)**

(54) **Conteneur perméable recevant un agent volatil de traitement d'air, pour notamment une installation de ventilation, de chauffage et/ou de climatisation d'un véhicule**

(57)   L'invention a pour objet un dispositif de traitement de l'air utilisant un agent traitant volatil contenu à l'intérieur d'un conteneur perméable (1), notamment applicable à une installation de ventilation, de chauffage et/ou de climatisation. L'agent traitant est un liquide conditionné par absorption à l'intérieur d'un corps cohésif (2) spongieux occupant le volume disponible d'une chambre (3) formée par un évidement interne du conteneur (1).

fig.1

EP 1 671 658 A1

**Description**

**Domaine technique de l'invention.**

L'invention est du domaine de la désinfection, de la stérilisation et/ou de l'odorisation de l'air, notamment applicable aux installations de ventilation, de chauffage et/ou de climatisation, pour habitacle de véhicule plus particulièrement. Elle a pour objet un dispositif de traitement de l'air utilisant un agent traitant volatil logé à l'intérieur d'un conteneur perméable, pour notamment traiter l'air circulant à travers une telle installation.

**Etat de la technique.**

On connaît des dispositifs pour traiter l'air utilisant un agent traitant volatil placé à l'intérieur d'un conteneur perméable, pour une diffusion progressive de l'agent traitant à travers la paroi du conteneur sur une période donnée. Ce traitement est par exemple un traitement fongicide, anti-microbien ou odorant.

Selon une première solution connue, l'agent traitant est un liquide contenu à l'intérieur d'un sachet perméable au gaz et imperméable au liquide, lui-même emballé à l'intérieur d'un conteneur imperméable qui est retiré au moment de l'utilisation du dispositif. On pourra par exemple se reporter au document US4961493 qui décrit un tel dispositif.

Inversement et selon une autre solution connue, l'agent traitant est un liquide contenu à l'intérieur d'un sachet imperméable, lui-même contenu dans un conteneur perméable. Lors de l'utilisation du dispositif, le sachet imperméable est rompu pour libérer l'agent traitant à l'intérieur du conteneur perméable. On pourra par exemple se reporter au document US5458244 qui décrit un tel dispositif.

Se pose le problème de la pérennité du traitement sur une période souhaitée la plus longue possible. Il a été proposé de mêler l'agent traitant à l'état liquide à une substance gélifiée, et de conditionner le mélange obtenu à l'intérieur d'un ou plusieurs sachets perméables déposés à l'intérieur d'un conteneur perméable. On pourra par exemple se reporter au document EP1440696 qui décrit un dispositif du genre. De tels dispositifs sont notamment appliqués au traitement de l'air circulant à l'intérieur d'une installation de ventilation, de chauffage et/ou de climatisation d'un véhicule. De manière connue, le conteneur perméable recevant les sachets est placé à l'intérieur de l'installation, en étant par exemple fixé sur un filtre à habitacle.

Il est souhaité pour de tels dispositifs un faible encombrement pour une durée de vie la plus longue et une diffusion la plus stable possible. Il est apparu cependant à l'usage que l'utilisation d'une substance gélifiée n'était pas satisfaisante. En effet, le volume nécessaire au conditionnement du mélange de l'agent traitant mêlé à la substance gélifiée à l'intérieur du sachet nécessite un conteneur de grandes dimensions pour la réception du sachet. De surcroît, le sachet est susceptible de ne pas occuper la totalité de l'espace disponible du conteneur, avec pour conséquence une perte du volume utile de ce dernier. Enfin, l'utilisation d'une telle technique de conditionnement de l'agent traitant implique, pour une épaisseur donnée du conteneur, une surface perméable de ce conteneur importante pour permettre une diffusion satisfaisante de l'agent traitant mêlé à la substance gélifiée.

**Objet de l'invention.**

Le but de la présente invention est de proposer un dispositif de traitement de l'air à partir d'un agent traitant volatil contenu à l'intérieur d'un conteneur perméable, qui offre une diffusion satisfaisante, stable et pérenne de l'agent traitant tout en optimisant la surface disponible de diffusion de l'agent traitant à travers le conteneur afin finalement d'en réduire l'encombrement général.

Un tel dispositif est notamment destiné à être appliqué à une installation de ventilation, de chauffage et/ou de climatisation d'un véhicule, prenant en compte les contraintes d'utilisation et d'installation du dispositif à l'intérieur d'une telle installation, notamment au regard de l'encombrement du dispositif souhaité le plus faible possible, de la fiabilité, de la pérennité et de la stabilité de la diffusion de l'agent traitant, des modalités aisées d'installation du dispositif à l'intérieur de l'installation, et notamment sur un filtre à habitacle, ainsi que des modalités de renouvellement du dispositif dans le cas où celui-ci est consommable, voire de l'agent traitant à l'intérieur du dispositif dans le cas contraire.

Le dispositif de la présente invention est un dispositif de traitement de l'air utilisant un agent traitant volatil contenu à l'intérieur d'un conteneur perméable. Selon la présente invention, un tel dispositif est principalement reconnaissable en ce que l'agent traitant est conditionné par absorption à l'intérieur d'un corps cohésif spongieux occupant au moins partiellement, avantageusement la quasi totalité du volume disponible d'une chambre formée par un évidement interne du conteneur.

L'occupation par le corps du volume de la chambre est optimale, préférentiellement à l'exception d'une mince couche d'air ménagée entre le corps et la paroi de la chambre pour d'une part faciliter l'introduction du corps à l'intérieur de la chambre, et d'autre part favoriser le dégagement de l'agent traitant.

L'agent traitant est de préférence maintenu à l'état liquide pour favoriser son absorption par le corps cohésif spongieux. On comprendra toutefois que cette disposition est à considérer au regard de toute autre disposition analogue, par exemple du type gélifié, visant à maintenir l'agent traitant dans un état dans lequel il est susceptible d'être absorbé par le corps cohésif spongieux.

Il ressort de ces dispositions que le maintien de l'agent traitant à l'état liquide ou analogue et son conditionnement à l'intérieur du corps cohésif spongieux permet de limiter l'encombrement de l'ensemble qu'ils forment, pour une fiabilité de diffusion de l'agent traitant à travers la paroi du conteneur qui est satisfaisante et pérenne pour une surface de diffusion, et donc un encombrement du conteneur les plus faibles possibles. Ces dispositions sont particulièrement avantageuses pour permettre une fixation aisée du conteneur sur un filtre à habitacle, tel que filtre à particules, filtre à charbon actif, filtre combiné ou organe analogue, tout en optimisant la faculté du dégagement de l'agent traitant.

Ce corps cohésif spongieux est une masse susceptible d'être formée à partir de matière textile, telles que fibres textiles mêlées naturelles ou artificielles, à partir d'une masse de cellulose, tel qu'un tampon de buvard épais du type formé d'une touche ou d'une mouillette, à partir d'un corps formé d'un substrat minéral ou végétal, éventuellement parcellisé et compressé, à partir d'une masse cohésive de poudre de polymère, voire à partir d'un matériau d'origine animale tel qu'un cuir poreux.

Plus particulièrement dans le cas où le corps cohésif spongieux est en matière textile, cette matière est susceptible d'être de la laine, du coton, des microfibres synthétiques tel que polypropylène, ou en tout autre matière textile naturelle ou artificielle.

Plus particulièrement encore, dans le cas où le corps cohésif spongieux est un matériau végétal, ce matériau est susceptible d'être une ouate de cellulose, du bois blanc tel que de sapin ou de pin, du marron, de la sciure compressée, de la tourbe de sphaigne ou autre matériau végétal analogue.

Plus particulièrement encore, dans le cas où le corps cohésif spongieux est un matériau minéral, ce matériau est susceptible d'être de la montmorillonite, de l'attapulgite, un mélange terreux tel que cellulose mêlé à du kaolin, de la terre de diatomée calciné, de la magnésie, de la chaux, des oxydes métallique tel que de fer ou d'aluminium, des silicates, de la vermiculite, du charbon actif, de la silice, du kieselguhr ou autre minéral analogue.

Le conteneur perméable est notamment un conteneur rigide, préférentiellement muni d'un capuchon de fermeture de la chambre de réception du corps cohésif spongieux. Dans le cas préféré où le dispositif est consommable, le capuchon est mis en place définitivement sur le conteneur, l'ensemble du dispositif étant remplacé après usure. Cette mise en place définitive résulte par exemple d'un emboîtement en force du capuchon sur le conteneur. Selon une autre variante, il est prévu d'assembler de manière réversible le capuchon sur le conteneur pour renouveler la charge du dispositif en agent traitant. Ce renouvellement est par exemple réalisé par remplacement du corps cohésif spongieux, ou par remplissage du conteneur en agent traitant.

Ce conteneur perméable est notamment formé d'une matière plastique, telle que par exemple du type polypropylène, éventuellement chargée de talc en proportion comprise entre 0% et 40%, et plus particulièrement de l'ordre de 20%, pour notamment une épaisseur de paroi comprise entre 0,5 mm et 2 mm.

A partir de ce choix, il est apparu après des essais menés empiriquement sur le fondement de choix intuitifs des concepteurs que pour déterminer les caractéristiques dimensionnelles du conteneur, et notamment le, rapport entre l'épaisseur $\underline{Ep}$ et la surface $\underline{S}$ de diffusion du conteneur, il pouvait être appliqué la règle suivante pour une diffusion annuelle X souhaitée exprimée en mg/jour :

$$X = 6{,}05 * 10^{-8} * S * \exp((0{,}0452T - 15{,}89) * Ep + 0{,}0451T)$$

Dans laquelle :

S est la surface de diffusion du conteneur exprimée en mm$^2$,
Ep est l'épaisseur du conteneur exprimée en mm,
T est la température ambiante moyenne exprimée en degré Kelvin.

La quantité de liquide traitant contenu dans le corps cohésif spongieux est dans ce cas comprise entre 1,82 gr et 21,9 gr selon les conditions d'utilisation du dispositif.

L'invention vise aussi un filtre à air pour habitacle de véhicule automobile comprenant un bord périphérique qui maintient un média filtrant innovant en ce que le filtre comporte un dispositif de traitement de l'air selon l'une quelconque des caractéristiques précédentes.

Avantageusement, le filtre à air est intégré à une installation de ventilation, chauffage et/ou climatisation de l'habitacle d'un véhicule automobile.

**Description des figures.**

La présente invention sera mieux comprise à la lecture de la description qui va en être faite d'un exemple de réalisation, en relation avec les figures des planches annexées, dans lesquelles :

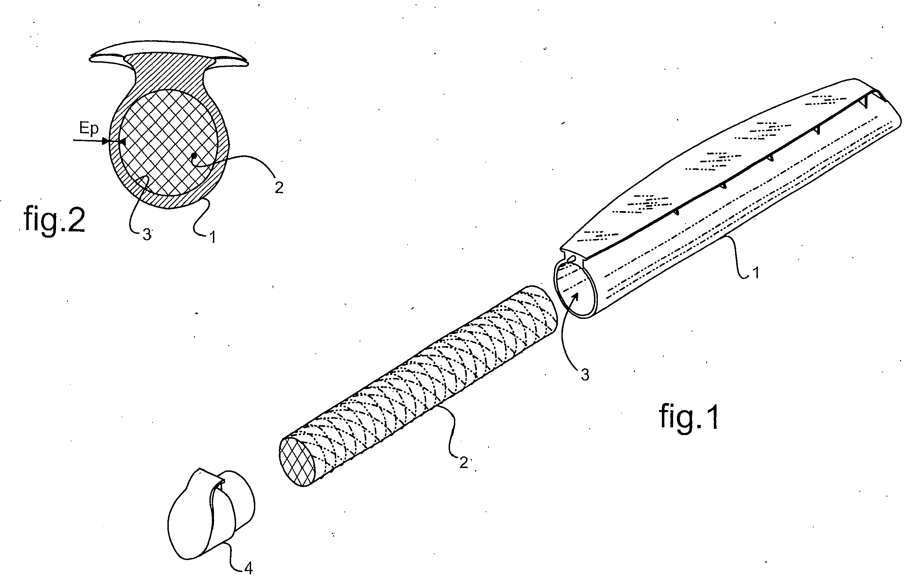

La fig.1 est une vue en perspective éclatée d'un dispositif de traitement d'air selon une forme préférée de réalisation de l'invention.
La fig.2 est une vue en coupe du dispositif représenté sur la fig.1.

Sur les figures, un dispositif est destiné au traitement de l'air à partir.d'un agent traitant volatil contenu à l'intérieur d'un conteneur perméable 1. Selon la présente invention, le choix des concepteurs s'est principalement porté sur l'utilisation d'un agent traitant préférentiellement maintenu à l'état liquide, ou de manière analogue dans un état dans lequel il est susceptible d'être absorbé par une masse spongieuse. L'agent traitant est conditionné par absorption à l'intérieur d'un corps cohésif 2 spongieux logé à l'intérieur du conteneur perméable 1. On comprendra par corps cohésif un corps présentant la caractéristique de former une masse d'éléments maintenus entre eux pour constituer un ensemble, cette masse cohésive étant spongieuse en présentant le caractère de pouvoir s'imbiber facilement de l'agent traitant.

Ce corps cohésif 2 est notamment formé d'une masse poreuse agencé en tampon dont le volume occupe au moins partiellement, par exemple la quasi-totalité, du volume d'une chambre 3 formée par un évidement interne du conteneur 1, sans élément intermédiaire entre le corps cohésif 2 imbibé de l'agent traitant à l'état liquide et la paroi perméable du conteneur 1. Plus particulièrement, le corps cohésif spongieux 2 occupe le volume de la chambre 3 à l'exception d'une mince couche d'air ménagée entre le corps cohésif spongieux 2 et la paroi de la chambre 3. Ces dispositions visent à faciliter l'introduction du corps cohésif spongieux 2 à l'intérieur de la chambre 3 en ménageant entre eux un espace, qui de surcroît favorise le dégagement de l'agent traitant.

Plus particulièrement, le dispositif de l'invention selon la variante de réalisation illustrée comprend le conteneur perméable 1 recevant directement le corps cohésif 2 absorbant. On comprendra que cette réception directe s'entend sans élément interposé entre le corps cohésif 2 et la paroi du conteneur 1. Ce corps cohésif. 2 est imbibé de l'agent traitant à l'état liquide, allyl-isothiocyanate notamment, et est introduit à l'intérieur de la chambre 3 de réception que comporte le conteneur perméable 1.

La conformation du corps cohésif 2 est avantageusement sensiblement complémentaire à celle de la chambre 3, pour optimiser l'occupation du volume utile du conteneur perméable 1 à l'exception d'une mince couche d'air ménagée entre le corps cohésif 2 et la paroi du conteneur 1. Ces dispositions permettent de restreindre l'encombrement extérieur global du conteneur. Grâce à ces dispositions, et au caractère rigide du conteneur 1, l'implantation de ce dernier sur un filtre à habitacle en est facilité. Sur l'exemple de réalisation illustré, le corps cohésif 2 est conformé en tampon cylindrique formé à partir d'un feutre textile.

Le conteneur 1 est équipé d'un capuchon 4 d'obturation de la chambre 3, que le conteneur 1 reçoit par emboîtement. Ce capuchon 4 est emboîté en force à l'intérieur du conteneur 1, dans le cas préféré où le dispositif est consommable.

Le conteneur 1 quant à lui est rigide et est formé à partir d'une matière plastique perméable, polypropylène notamment, chargée de talc à 20%.

Il est finalement apparu qu'un compromis acceptable résidait, pour une diffusion annuelle de 45 mg/jour d'agent traitant, notamment de l'allyl-isothiocyanate, à une température constante de l'ordre de 40°C, dans une épaisseur $\underline{Ep}$ du conteneur 1 de l'ordre de 0,9 mm plus ou moins 20.% pour une surface globale de 4200 mm$^2$ Plus ou moins 10%.

Ilest cependant encore donné à titre indicatif les formulations suivantes citées pour exemple de conditions extrêmes d'utilisation.

Selon un premier exemple, pour une diffusion annuelle de 5 mg/jour d'agent traitant à 25°C, les caractéristiques d'épaisseur et de surface du conteneur 1 sont déterminées par la formulation suivante :

$$S = (8{,}264 * 10^7) / \exp(-2{,}4204\ Ep + 13{,}4398)$$

Selon un second exemple, pour une diffusion annuelle de 60mg/jour d'agent traitant à 10°C, les caractéristiques d'épaisseur et de surface du conteneur 1 sont déterminées par la formulation suivante :

$$S = (9{,}9173 * 10^8) / \exp(-3{,}0984\ Ep + 12{,}7633)$$

Il en ressort qu'à partir de ces deux exemples considérés en condition extrême d'utilisation, il peut être déterminé un quelconque rapport entre l'épaisseur Ep et la surface de diffusion du conteneur 1 pour une situation d'utilisation donnée.

A titre indicatif et pour une utilisation annuelle, le corps cohésif spongieux 1 est quant à lui d'un volume de l'ordre de 10900 mm$^3$ et d'une densité de 190 mg/cm$^3$, pour une libération de l'agent traitant de l'ordre de 45 mg/jour à 40°C. Selon les conditions d'utilisation et la nature du matériau absorbant du corps cohésif spongieux, celui-ci est susceptible d'être d'un volume compris entre 4500 mm$^3$ et 50000 mm$^3$ pour une densité comprise entre 100 mg/cm$^3$ et 300 mg/cm$^3$.

On comprendra que le volume de la chambre 3 est à considérer au regard de celui du corps cohésif 2, ces volumes étant sensiblement équivalents exception faite de l'espace qu'il est souhaité de ménager entre le corps cohésif 2 et la paroi interne du conteneur 1.

Le dispositif de traitement de l'air est fixé par exemple sur le média d'un filtre habitacle, du type à particules, à charbon actif ou une combinaison des deux, d'un véhicule automobile de sorte à être au coeur du flux d'air qui circule au travers du filtre. De dernier est constitué d'un bord périphérique ou cadre rigide ou déformable qui maintient en son centre le média filtrant sous une forme plissée.

Le dispositif de traitement de l'air peut aussi être fixé sur le bord périphérique du filtre.

Ces positionnements du dispositif de traitement de l'air sur un filtre lui-même installé à l'intérieur d'une installation de ventilation, chauffage et/ou climatisation permettent de détruire les microbes et odeurs qui peuvent naître à l'intérieur de cette installation.

Le conteneur 1 comprend une excroissance 5 qui permet de fixer le dispositif de traitement d'air sur le média filtrant ou sur le bord périphérique au moyen d'une pince ou d'un clip approprié.

Le dispositif peut ainsi être remplacer à chaque changement du filtre habitacle du véhicule ou être ré-utiliser en le replaçant sur le média du filtre neuf de l'installation. Ce dispositif de traitement est ainsi particulièrement adapté à une utilisation dans les réseaux de réparation automobile des constructeurs ou dans les réseaux après-vente indépendants.

**Revendications**

1. Dispositif de traitement de l'air utilisant un agent traitant volatil contenu à l'intérieur d'un conteneur perméable (1), **caractérisé en ce que** l'agent traitant est un liquide conditionné par absorption à l'intérieur d'un corps cohésif (2) spongieux occupant au moins partiellement le volume disponible d'une chambre (3) formée par un évidement interne du conteneur (1).

2. Dispositif de traitement de l'air selon la revendication 1, **caractérisé en ce que** le corps cohésif (2) spongieux est en matière textile.

3. Dispositif de traitement de l'air selon la revendication 1, **caractérisé en ce que** le corps cohésif (2) spongieux est constitué de l'un quelconque des éléments comprenant un tampon de buvard, un corps en matériau végétal, un corps en matériau minéral, une masse cohésive de poudre de polymère, un cuir d'origine animale.

4. Dispositif de traitement de l'air selon l'une quelconque des revendications précédentes, **caractérisé en ce que** le conteneur (1) est en matériau plastique chargée de talc dans une proportion comprise entre 0% et 40% pour une épaisseur de paroi comprise entre 0,5 mm et 2 mm.

5. Dispositif de traitement de l'air selon l'une quelconque des revendications précédentes, **caractérisé en ce que** le matériau plastique constitutif du conteneur (1) est du type polypropylène.

6. Dispositif de traitement de l'air selon la revendication 5, **caractérisé en ce que** pour une diffusion annuelle X souhaitée exprimée en mg/jour, le rapport entre l'épaisseur Ep et la surface S de diffusion du conteneur (1) est établi selon la règle suivante :

$$X = 6{,}05 * 10^{-8} * S * \exp((0{,}0452T - 15{,}89) * Ep + 0{,}0451T)$$

Dans laquelle :

S est la surface de diffusion du conteneur exprimée en mm$^2$,

Ep est l'épaisseur du conteneur exprimée en mm,

T est la température ambiante moyenne exprimée en degré Kelvin.

7.  Dispositif de traitement de l'air selon la revendication 6, **caractérisé en ce que** pour une diffusion annuelle de 45mg/jour d'agent traitant à une température constante de 40°C, l'épaisseur $\underline{Ep}$ du conteneur (1) est de l'ordre de 0,9 mm plus ou moins 20%, pour une surface $\underline{S}$ globale de diffusion de 4200 mm$^2$ plus ou mois 10%.

8.  Dispositif de traitement de l'air selon l'une quelconque des revendications précédentes, **caractérisé en ce que** le corps cohésif spongieux est d'un volume de l'ordre de 10900 mm3 pour une densité de 190 mg/cm3.

9.  Dispositif de traitement de l'air selon l'une quelconque des revendications précédentes, **caractérisé en ce que** le conteneur (1) est un conteneur rigide muni d'un capuchon (4) de fermeture de la chambre (3) de réception du corps cohésif (2) spongieux.

10. Filtre à air pour habitacle de véhicule automobile comprenant un bord périphérique qui maintient un média filtrant **caractérisé en ce qu'**il comporte un dispositif de traitement de l'air selon l'une quelconque des revendications précédentes.

11. Installation de ventilation, chauffage et/ou climatisation de l'habitacle d'un véhicule automobile **caractérisé en ce qu'**elle comporte un filtre à air selon la revendication 10.

fig.2

Ep

3        1

2

fig.1

3

1

2

4

EP 1 671 658 A1

**Office européen
des brevets**

## RAPPORT DE RECHERCHE EUROPEENNE

Numéro de la demande

EP 05 02 6440

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 4 356 969 A (OBERMAYER ET AL) 2 novembre 1982 (1982-11-02) * colonne 5, ligne 14 - ligne 19 * * colonne 10, ligne 11 - ligne 24; figure 4 * ----- | 1-3,5,6 | INV. A61L9/12 A61L2/04 |
| X | US 6 029 901 A (TOY, II ET AL) 29 février 2000 (2000-02-29) | 1-3,5,9 | |
| Y | ----- | 10,11 | |
| X | US 4 961 493 A (KAIHATSU ET AL) 9 octobre 1990 (1990-10-09) * colonne 3, ligne 20 - ligne 41; figure 3 * ----- | 1-3,5 | |
| Y | US 2002/197187 A1 (MURRAY JOSEPH C) 26 décembre 2002 (2002-12-26) * alinéa [0050] * ----- | 10,11 | |

DOMAINES TECHNIQUES RECHERCHES (IPC)

A61L

Le présent rapport a été établi pour toutes les revendications

| Lieu de la recherche | Date d'achèvement de la recherche | Examinateur |
|---|---|---|
| Munich | 6 avril 2006 | Haderlein, A |

**ANNEXE AU RAPPORT DE RECHERCHE EUROPEENNE
RELATIF A LA DEMANDE DE BREVET EUROPEEN NO.**

EP 05 02 6440

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-04-2006

| Document brevet cité au rapport de recherche | | Date de publication | Membre(s) de la famille de brevet(s) | | Date de publication |
|---|---|---|---|---|---|
| US 4356969 | A | 02-11-1982 | AUCUN | | |
| US 6029901 | A | 29-02-2000 | AUCUN | | |
| US 4961493 | A | 09-10-1990 | FR 2640858 A1 | | 29-06-1990 |
| | | | JP 2088655 U | | 13-07-1990 |
| | | | JP 4006760 Y2 | | 24-02-1992 |
| US 2002197187 | A1 | 26-12-2002 | US 2002197186 A1 | | 26-12-2002 |

EPO FORM P0460

Pour tout renseignement concernant cette annexe : voir Journal Officiel de l'Office européen des brevets, No.12/82